# DEMANDE DE BREVET EUROPEEN

(11) **EP 4 333 372 A1**
(43) Date de publication de la demande: **06.03.2024**
(21) Numéro de dépôt: 23194509.8
(22) Date de dépôt: 31.08.2023
(51) Int. Cl.: H04L 9/40, G06F 21/56, G06Q 50/40, H04B 7/185

(54) **CALCULATEUR AVIONIQUE COMPRENANT UN PROCESSEUR MULTIC URS, AVEC UN C UR DE FILTRAGE ENTRE DES DOMAINES OUVERT ET AVIONIQUE**

(30) Priorité: 01.09.2022 FR 2208775
(71) Demandeur: THALES, 92400 Courbevoie (FR)
(72) Inventeur: MONNIER, Stéphane, Jean-Mary, 33700 Merignac (FR); FINE, Alexandre, 33700 Merignac (FR)
(74) Mandataire: Lavoix

(57) **Abrégé**

Ce calculateur avionique (15) est destiné à être embarqué à bord d'un aéronef (5), et comprend un processeur multicoeurs (30) configuré pour exécuter des applications logicielles avioniques (A1, A2, A3).

Le processeur (30) comporte au moins un coeur primaire (40) pour communiquer avec au moins un équipement avionique (20) distinct du calculateur (15), chaque équipement avionique (20) étant embarqué à bord de l'aéronef (5) et appartenant à un domaine avionique (26) ; au moins un coeur secondaire (42) pour communiquer avec au moins un appareil électronique (22) externe au domaine avionique (26) ; et un coeur tertiaire (44) pour réaliser au moins un filtrage d'un message de donnée(s) reçu d'un appareil (22) respectif externe au domaine avionique (26) à destination d'un équipement avionique (20) respectif du domaine avionique (26).

Chaque application logicielle avionique est exécutable par l'au moins un coeur primaire (40) ou l'au moins un coeur secondaire (42).

## Description

La présente invention concerne un calculateur avionique destiné à être embarqué à bord d'un aéronef.

L'invention concerne plus particulièrement un avion, tout en étant applicable à tout type d'aéronef, tel qu'un hélicoptère ou un drone.

L'invention concerne en particulier le domaine de la cyber sécurité dans un contexte avionique.

Un aéronef comporte classiquement des équipements avioniques permettant d'aider le pilotage de l'aéronef, tels qu'un système de gestion de vol, ou FMS (de l'anglais *Flight Management System*) ; un système de guidage, ou FG (de l'anglais *Flight Guidance*) ; un système de commandes de vol, ou FCS (de l'anglais *Flight Control System*) ; etc. Ces équipements avioniques échangent entre eux des informations grâce à un réseau de communication de l'aéronef, lesquels font partie d'un système de communication au sein de l'aéronef, incluant généralement d'autres équipements que les équipements avioniques. Le système de communication comprend notamment des équipements mettant en oeuvre des fonctions relatives à la compagnie aérienne exploitant l'aéronef, tel qu'un système de maintenance, ou CMS (de l'anglais *Centralized Maintenance System*) ; ou un système de gestion de la cabine passagers.

Les équipements avioniques sont regroupés dans un domaine, dit domaine avionique, auquel correspond un niveau de sécurité (de l'anglais *security level*) requis le plus élevé du système de communication de l'aéronef afin de garantir que le fonctionnement des fonctions mises en oeuvre par les équipements avioniques ne risque pas d'être perturbé par des communications avec des équipements extérieurs au domaine avionique. Le niveau de sécurité requis pour les autres équipements est moins élevé que le niveau de sécurité requis pour le domaine avionique.

Le système de communication est par exemple conforme au standard ARINC 811 qui définit différents domaines ayant des niveaux de sécurité différents dans un système de communication d'un aéronef, notamment : un domaine ACD (de l'anglais *Aircraft Control Domain*) correspondant au domaine avionique précité ; un domaine AISD (de l'anglais *Airline Information Services Domain*) comprenant des équipements mettant en oeuvre les fonctions relatives à la compagnie aérienne (maintenance, gestion de la cabine, etc.) ; et un domaine PIESD (de l'anglais *Passenger Information and Entertainement Services Domain*) relatif au divertissement et à l'information des passagers.

Conformément au standard ARINC 811, le niveau de sécurité du domaine ACD correspond à un niveau de sécurité le plus élevé du système de communication de l'aéronef car les fonctions mises en oeuvre par les équipements du domaine ACD peuvent être essentielles pour le contrôle du vol de l'aéronef. Le niveau de sécurité du domaine AISD est moins élevé que celui du domaine ACD, les fonctions mises en oeuvre dans le domaine AISD étant moins essentielles, au moins à court terme, pour le contrôle du vol de l'aéronef. Le niveau de sécurité du domaine PIESD est moins élevé que le niveau de sécurité du domaine AISD.

L'échange d'informations d'un domaine ayant un niveau de sécurité moins élevé vers un domaine ayant un niveau de sécurité plus élevé est très fortement restreint afin de ne pas compromettre la sécurité du domaine ayant le niveau de sécurité le plus élevé. En particulier, le transfert d'informations d'un domaine, dit domaine ouvert et correspondant à l'extérieur du domaine ACD, vers le domaine ACD est fortement restreint afin de ne pas compromettre la sécurité du domaine ACD.

Pour répondre à ce besoin de passerelle de sécurité entre le domaine ouvert et le domaine avionique de niveau de sécurité plus élevé, il est connu du document FR 3 079 609 B1 d'implémenter cette passerelle de sécurité via un calculateur dédié proposant une solution unidirectionnelle de données sortantes.

Toutefois, une telle passerelle de sécurité n'est pas optimale.

Le but de l'invention est alors de proposer un calculateur avionique permettant de répondre plus efficacement à ce besoin de passerelle de sécurité entre le domaine ouvert et le domaine avionique.

A cet effet, l'invention a pour objet un calculateur avionique destiné à être embarqué à bord d'un aéronef, le calculateur comprenant un processeur multicoeurs configuré pour exécuter une ou plusieurs applications logicielles avioniques, le processeur comportant :
- au moins un coeur primaire configuré pour communiquer avec au moins un équipement avionique distinct du calculateur, le ou chaque équipement avionique étant embarqué à bord de l'aéronef et appartenant à un domaine avionique,
- au moins un coeur secondaire configuré pour communiquer avec au moins un appareil électronique externe au domaine avionique, l'au moins un coeur secondaire étant distinct de l'au moins un coeur primaire, et
- un coeur tertiaire configuré pour réaliser au moins un filtrage d'un message de donnée(s) reçu d'un appareil respectif externe au domaine avionique à destination d'un équipement avionique respectif du domaine avionique, le coeur tertiaire étant distinct de l'au moins un coeur primaire et de l'au moins un coeur secondaire ;
chaque application logicielle avionique étant exécutable par un coeur respectif choisi parmi l'au moins un coeur primaire et l'au moins un coeur secondaire.

Avec le calculateur avionique selon l'invention, l'au moins un coeur primaire est adapté pour communiquer avec le domaine avionique, le coeur secondaire est adapté pour communiquer avec le domaine ouvert, et le coeur tertiaire forme alors, de par l'au moins un filtrage réalisé, une barrière de sécurité entre le domaine ouvert et le domaine avionique.

D'un point de vue cyber sécurité, le coeur secondaire et le coeur tertiaire appartiennent alors à une zone exposée au domaine ouvert, en particulier pour le coeur secondaire en communication avec ce domaine ouvert ; l'au moins un coeur primaire appartient à une zone de confiance protégée par la barrière de sécurité formée par le coeur tertiaire.

Outre cette fonctionnalité de passerelle de sécurité, le calculateur avionique est configuré pour exécuter une ou plusieurs applications logicielles, et remplit alors une double fonctionnalité.

L'homme du métier observera encore que le calculateur selon l'invention offre alors une ségrégation spatiale entre les traitements associés au domaine avionique effectués, i.e. exécutés, par l'au moins un coeur primaire ; les traitements associés au domaine ouvert effectués par le coeur secondaire distinct de l'au moins un coeur primaire ; et enfin les traitements associés à l'au moins un filtrage pour former la barrière de sécurité entre le domaine ouvert et le domaine avionique, effectués par le coeur tertiaire distinct à la fois du coeur secondaire et de l'au moins un coeur primaire.

De préférence, le calculateur selon l'invention offre également une ségrégation temporelle entre les traitements associés à l'au moins un filtrage et les autres traitements, les traitements associés à l'au moins un filtrage étant effectués au cours d'au moins une zone temporelle dédiée au coeur tertiaire, et les autres traitements étant effectués au cours d'une ou plusieurs autres zones temporelles, distinctes de ladite au moins une zone temporelle dédiée.

L'homme du métier comprendra que les terminologies coeur primaire, coeur secondaire et coeur tertiaire visent seulement à distinguer ces coeurs les uns des autres au sein du processeur multicoeur, au regard des rôles, ou fonctionnalités, distincts associés à ces différents coeurs. L'homme du métier observera néanmoins que ces terminologies n'induisent aucune relation d'ordre, d'importance ou encore de priorité entre ces coeurs. Des terminologies alternatives possibles pour ces coeurs seraient premier coeur, deuxième coeur et troisième coeur, tout en paraissant moins appropriées, étant donné que le processeur multicoeur est susceptible de comporter plusieurs coeurs primaires, c'est-à-dire plusieurs premiers coeurs.

Suivant d'autres aspects avantageux de l'invention, le calculateur avionique comprend une ou plusieurs des caractéristiques suivantes, prises isolément ou suivant toutes les combinaisons techniquement possibles :
- chaque filtrage est choisi parmi un filtrage syntaxique et un filtrage sémantique ;
   le filtrage syntaxique comportant de préférence la vérification d'au moins un critère syntaxique choisi parmi le groupe consistant en : l'appartenance de l'émetteur du message à une liste d'émetteurs autorisés, l'appartenance du destinataire du message à une liste de destinataires autorisés, et la conformité du message à l'un des formats prédéfinis autorisés ;
   le filtrage sémantique comportant de préférence la vérification d'au moins un critère sémantique choisi parmi le groupe consistant en : l'appartenance d'une ou plusieurs données du message à une plage de valeurs autorisées, la cohérence d'au moins une donnée du message par rapport à une référence prédéfinie, et la cohérence entre au moins deux données du message ;
- le coeur tertiaire est configuré en outre pour, après la réalisation de l'au moins un filtrage, transmettre le message à l'équipement avionique respectif avec un protocole de communication différent de celui associé au message reçu de l'appareil externe respectif ;
- le processeur est configuré pour exécuter un ou plusieurs traitements logiciels au cours d'une période temporelle prédéfinie, la période temporelle prédéfinie étant répétée de manière périodique, la période temporelle prédéfinie comportant plusieurs zones temporelles distinctes et successives, et au moins l'une desdites zones temporelles est réservée à l'exécution de traitement(s) logiciel(s) par le coeur tertiaire ;
   l'exécution de traitement(s) logiciel(s) par l'au moins un coeur primaire et/ou l'au moins un coeur secondaire étant de préférence interdite lors de l'au moins une zone temporelle réservée à l'exécution de traitement(s) logiciel(s) par le coeur tertiaire ;
- chaque communication avec un équipement avionique respectif est effectuée par le coeur primaire correspondant selon un protocole de communication avionique respectif et via un port primaire de communication respectif du calculateur ;
   le protocole de communication avionique étant de préférence choisi parmi le groupe consistant en : un protocole conforme à la norme ARINC 664, telle que la norme ARINC 664 Partie 3 ou la norme ARINC 664 Partie 7 ; un protocole conforme à la norme ARINC 429 ; un protocole conforme à la norme ISO 11898, dite bus CAN, telle que la norme ISO 11898-2 ou la norme ISO 11898-3 ; et un protocole conforme à la norme MIL-STD-1553, telle que la norme MIL-STD-1553A ou la norme MIL-STD-1553B ;
- le calculateur comprend en outre un périphérique primaire de communication pour chaque protocole de communication avionique respectif, chaque périphérique primaire de communication étant connecté entre l'au moins un coeur primaire et le port primaire de communication respectif ;
   chaque périphérique primaire de communication étant de préférence commandable via un pilote primaire de périphérique respectif, et chaque pilote primaire de périphérique est exécutable en mode utilisateur ou en mode noyau ;
- chaque communication avec un appareil électronique externe respectif est effectuée par le coeur secondaire correspondant selon un protocole de communication externe et via un port secondaire de communication respectif du calculateur ;
   le protocole de communication externe étant de préférence choisi parmi un protocole conforme à la norme Ethernet et un protocole conforme à la norme ARINC 429 ;
- le calculateur comprend en outre un périphérique secondaire de communication pour chaque protocole de communication externe respectif, chaque périphérique secondaire de communication étant connecté entre l'au moins un coeur secondaire et le port secondaire de communication respectif ;
   chaque périphérique secondaire de communication étant de préférence commandable via un pilote secondaire de périphérique respectif, et chaque pilote secondaire de périphérique est exécutable seulement en mode utilisateur ;
- le calculateur comprend en outre un bus primaire de communication reliant l'au moins un coeur primaire à chaque périphérique primaire de communication respectif, et un bus secondaire de communication reliant l'au moins un coeur secondaire à chaque périphérique secondaire de communication respectif, chaque bus secondaire étant distinct de chaque bus primaire ;
- chaque port secondaire de communication est distinct de chaque port primaire de communication ; et
- le domaine avionique est un domaine correspondant à un niveau de sécurité le plus élevé à bord de l'aéronef ;
le domaine avionique étant de préférence le domaine ACD selon la norme ARINC 811 du 20 décembre 2005.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

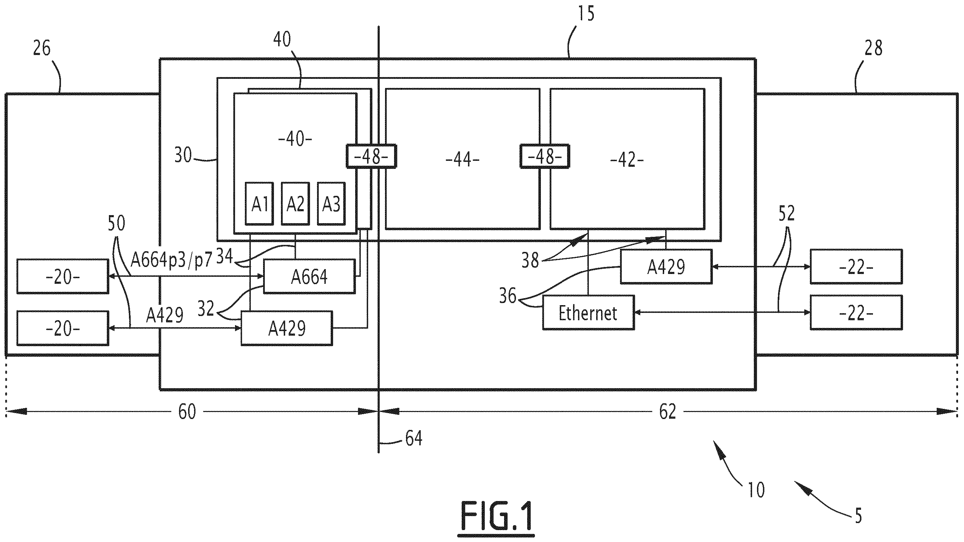

- la figure 1 est une représentation schématique d'un système de communication au sein d'un aéronef, le système de communication comprenant un calculateur avionique selon un premier exemple de réalisation de l'invention, au moins un équipement avionique appartenant à un domaine avionique et au moins un appareil électronique externe au domaine avionique, le calculateur avionique étant connecté entre l'au moins un équipement avionique et l'au moins un appareil électronique externe et formant une passerelle de communication entre eux ; et

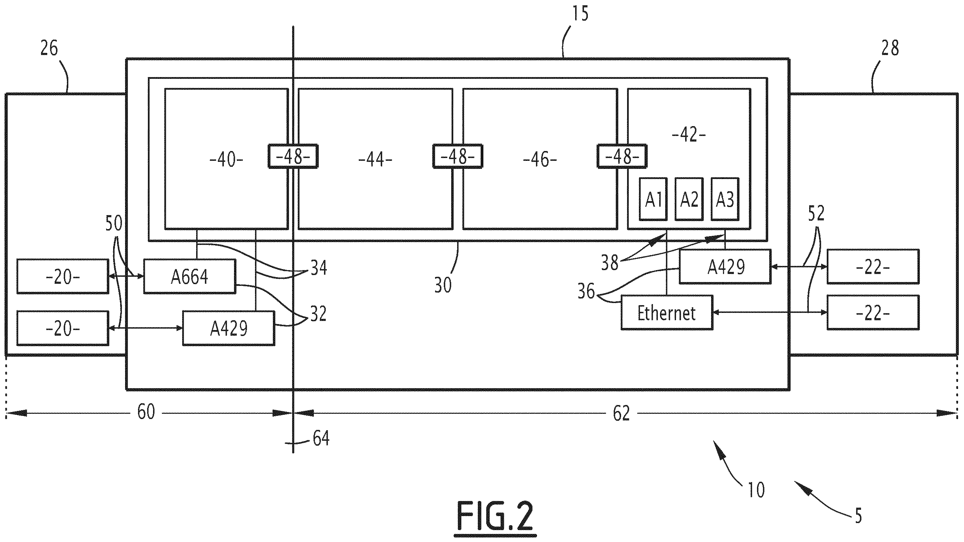

- la figure 2 est une vue analogue à celle de la figure 1, selon un deuxième exemple de réalisation de l'invention.

Sur la figure 1, un aéronef 5 comprend un système de communication 10 comportant un calculateur avionique 15, au moins un équipement avionique 20 et au moins un appareil 22 externe à un domaine avionique 26.

L'aéronef 5 est par exemple un avion. En variante, l'aéronef 5 est un hélicoptère, ou encore un drone pilotable à distance par un pilote.

Le système de communication 10 comporte typiquement plusieurs équipements avioniques 20 et/ou plusieurs appareils externes 22.

Le système de communication 10 comporte le domaine avionique 26 et un domaine ouvert 28, comme représenté sur la figure 1.

Le domaine avionique 26 est un domaine correspondant à un niveau de sécurité (de l'anglais *security level*) le plus élevé à bord de l'aéronef 5, en particulier le niveau de sécurité requis le plus élevé du système de communication 10 de l'aéronef 5.

Le domaine avionique 26 est alors un domaine pour limiter un risque de perturbation - par au moins une communication avec l'au moins un appareil électronique 22 externe au domaine avionique 26 - de fonction(s) mise(s) en oeuvre par l'au moins un équipement avionique 20 du domaine avionique 26. Le domaine avionique 26 inclut le ou les équipements avioniques 20.

Le domaine avionique 26 est typiquement le domaine ACD selon la norme ARINC 811 du 20 décembre 2005.

Le domaine ouvert 28 est un domaine auquel correspond un niveau de sécurité moins élevé que le niveau de sécurité du domaine avionique 26. Le domaine ouvert 28 inclut le ou les appareils externes 22.

Le calculateur avionique 15 est connecté à chaque équipement avionique 20 et à chacun appareil externe 22 du système de communication 10, et forme alors une passerelle de communication entre chaque équipement avionique 20 et chaque appareil externe 22.

Dans les exemples des figures 1 et 2, le calculateur avionique 15 est embarqué à bord de l'aéronef 5, et comprend un processeur multicoeurs 30 configuré pour exécuter une ou plusieurs applications logicielles avioniques A1, A2, A3.

Le calculateur avionique 15 est configuré pour communiquer avec chaque équipement avionique 20 selon un protocole de communication avionique respectif.

Le protocole de communication avionique est par exemple choisi parmi le groupe consistant en : un protocole conforme à la norme ARINC 664, telle que la norme ARINC 664 Partie 3 ou la norme ARINC 664 Partie 7 ; un protocole conforme à la norme ARINC 429 ; un protocole conforme à la norme ISO 11898, dite bus CAN, telle que la norme ISO 11898-2 ou la norme ISO 11898-3 ; et un protocole conforme à la norme MIL-STD-1553, telle que la norme MIL-STD-1553A ou la norme MIL-STD-1553B.

En complément, le calculateur avionique 15 comprend en outre un périphérique primaire de communication 32 pour chaque protocole de communication avionique respectif. Selon ce complément, le calculateur avionique 15 comprend typiquement un bus primaire de communication 34 reliant le processeur 30 à chaque périphérique primaire de communication 32 respectif.

Le calculateur avionique 15 est configuré pour communiquer avec chaque appareil électronique externe 22 selon un protocole de communication externe respectif.

Le protocole de communication externe est par exemple un protocole conforme à la norme Ethernet ou un protocole conforme à la norme ARINC 429.

En complément, le calculateur avionique 15 comprend en outre un périphérique secondaire de communication 36 pour chaque protocole de communication externe respectif. Selon ce complément, le calculateur avionique 15 comprend typiquement un bus secondaire de communication 38 reliant le processeur 30 à chaque périphérique secondaire de communication 36 respectif, chaque bus secondaire 38 étant distinct de chaque bus primaire 34.

Chaque équipement avionique 20 est embarqué à bord de l'aéronef 5 et appartient au domaine avionique 26. Chaque équipement avionique 20 est connu en soi, et est configuré pour mettre en oeuvre une ou plusieurs fonctions avioniques respectives.

Chaque équipement avionique 20 est par exemple choisi parmi le groupe consistant en : un système de gestion du vol de l'aéronef, également appelé FMS (de l'anglais *Flight Management System*) ; un système de guidage, ou FG (de l'anglais *Flight Guidance*) ; un système de commandes de vol, ou FCS (de l'anglais *Flight Control System*) ; un système de positionnement par satellite, tel qu'un système GPS (de l'anglais *Global Positioning System*) ; un système de référence inertielle, également appelé système IRS (de l'anglais *Inertial Reference System*) ; un système d'aide à l'atterrissage ILS (de l'anglais *Instrument Landing System*) ou un système d'aide à l'atterrissage MLS (de l'anglais *Microwave Landing System*) ; un système de prévention de sortie de piste actif, également appelé système ROPS (de l'anglais *Runway Overrun Prévention System*) ; et un radioaltimètre, également noté RA (de l'anglais *RadioAltimeter*).

Chaque appareil externe 22 appartient au domaine ouvert 28, et est embarqué à bord de l'aéronef 5, ou bien installé au sol. À titre d'exemple, l'appareil externe 22 est un appareil mettant en oeuvre des fonctions relatives à la compagnie aérienne exploitant l'aéronef, tel qu'un système de maintenance, ou CMS (de l'anglais *Centralized Maintenance System*) *;* ou un système de gestion de la cabine passagers. À titre d'exemple encore, l'appareil externe 22 est un appareil électronique avec une fonctionnalité de gestion du vol, par exemple une tablette embarquée non-avionique, c'est-à-dire une tablette embarquée non-certifiée, tel qu'un EFB (de l'anglais *Electronic Flight Bag*).

Le processeur 30 comporte au moins un coeur primaire 40 configuré pour communiquer avec au moins un équipement avionique 20 distinct du calculateur 15 ; au moins un coeur secondaire 42 configuré pour communiquer avec au moins un appareil électronique 22 externe au domaine avionique 26 ; et un coeur tertiaire 44 configuré pour réaliser au moins un filtrage d'un message de données reçu d'un appareil 22 respectif externe au domaine avionique 26 à destination d'un équipement avionique 20 respectif du domaine avionique 26. L'au moins un coeur secondaire 42 est distinct de l'au moins un coeur primaire 40, et le coeur tertiaire 44 est distinct de l'au moins un coeur primaire 40 et de l'au moins un coeur secondaire 42.

Dans l'exemple de la figure 2, le processeur 30 comporte en outre un coeur complémentaire 46.

Dans les exemples des figures 1 et 2, le processeur 30 comporte quatre coeurs. Plus précisément, dans l'exemple de la figure 1, le processeur 30 comporte deux coeurs primaires 40, un coeur secondaire 42 et un coeur tertiaire 44. Dans l'exemple de la figure 2, le processeur 30 comporte un coeur primaire 40, un coeur secondaire 42, un coeur tertiaire 44 et un coeur complémentaire 46.

En variante, le processeur 30 comporte plus de quatre coeurs, et comporte alors typiquement plusieurs coeurs complémentaires 46 et/ou plusieurs coeurs primaires 40 et/ou secondaires 42.

Le processeur 30 comporte avantageusement un unique coeur tertiaire 44.

La communication entre les coeurs 40, 42, 44, 46 du processeur 30 s'effectue typiquement via des ports internes 48, inclus dans le processeur 30.

Avantageusement, chaque coeur primaire 40 est en relation avec le domaine avionique 26, et communique seulement avec le coeur tertiaire 44 via un port interne 48 respectif.

Le coeur tertiaire 44 forme un filtre entre le domaine ouvert 28 et le domaine avionique 26, et communique alors avec chaque coeur primaire 40 d'une part, et avec au moins un coeur secondaire 42 et/ou un coeur complémentaire 46 d'autre part, ces communications entre coeurs s'effectuant via des ports internes 48 respectifs.

En complément facultatif, au moins un coeur secondaire 42 est configuré pour mettre en oeuvre un pare-feu (de l'anglais *firewall*), afin d'effectuer un filtrage préliminaire des messages reçus de chaque appareil externe 22.

Dans l'exemple de la figure 1, les deux coeurs primaires 40 sont en communication avec seulement le coeur tertiaire 44, et pas avec le coeur secondaire 42. De manière réciproque, le coeur secondaire 42 communique seulement avec le coeur tertiaire 44, et pas avec les coeurs primaires 40.

Dans l'exemple de la figure 2, le coeur primaire 40 communique seulement avec le coeur tertiaire 44, et le coeur tertiaire 44 communique avec le coeur secondaire 42 indirectement via le coeur complémentaire 46. Selon cet exemple, le coeur complémentaire 46 est alors, en termes de communication, disposé entre le coeur tertiaire 44 et le coeur secondaire 42.

Chaque communication du calculateur avionique 15 avec un équipement avionique 20 respectif est effectuée par le coeur primaire 40 correspondant selon un protocole de communication avionique respectif et via un port primaire de communication 50 respectif du calculateur 15.

Chaque communication du calculateur avionique 15 avec un appareil électronique externe 22 respectif est effectuée par le coeur secondaire 42 correspondant selon un protocole de communication externe et via un port secondaire de communication 52 respectif du calculateur 15. Chaque port secondaire de communication 52 est avantageusement distinct de chaque port primaire de communication 50.

L'homme du métier comprendra alors que d'une part, le domaine avionique 26 incluant chaque équipement avionique 20, chaque périphérique primaire 32, chaque bus primaire 34, chaque coeur primaire 40 et chaque port primaire 50 appartiennent à une zone de confiance 60 ; et d'autre part, le domaine ouvert 28 incluant chaque appareil externe 22, chaque périphérique secondaire 36, chaque bus secondaire 38, chaque coeur secondaire 42, le coeur tertiaire 44, et le cas échéant chaque coeur complémentaire 46, ainsi que chaque port secondaire 52, appartiennent à une zone exposée 62 ; une frontière 64 entre la zone de confiance 60 et la zone exposée 62 correspondant alors à l'interface de communication entre le ou les coeurs primaires 40 d'une part et le coeur tertiaire 44 d'autre part, comme représenté sur les figures 1 et 2.

Chaque application logicielle avionique A1, A2, A3 est exécutable par un coeur respectif choisi parmi l'au moins un coeur primaire 40 et l'au moins un coeur secondaire 42.

Dans l'exemple de la figure 1, les applications logicielles avioniques A1, A2, A3 sont exécutées par l'au moins un coeur primaire 40.

Dans l'exemple de la figure 2, les applications logicielles avioniques A1, A2, A3 sont exécutées par le coeur secondaire 42.

En variante, non représentée, certaine(s) application(s) logicielle(s) avionique(s) A1, A2 sont exécutées par l'au moins un coeur primaire 40, pendant que d'autre(s) application(s) logicielle(s) avionique(s) A3 sont exécutées par l'au moins un coeur secondaire 42.

La répartition, entre l'au moins un coeur primaire 40 et l'au moins un coeur secondaire 42, de l'exécution des applications logicielles avioniques A1, A2, A3 est avantageusement effectuée par type d'application logicielle. À titre d'exemple, le ou chaque coeur primaire 40 est configuré pour exécuter des applications de communication, telles que des applications de communication avec une station au sol ou ACARS (de l'anglais *Aircraft Communication Addressing and Reporting System*), par exemple des applications de communication pour le trafic aérien ou ATC (de l'anglais *Air Traffic Control*), des applications de communication pour le contrôle opérationnel aérien ou AOC (de l'anglais *Air Operational Control*), et des applications de communication pour le contrôle administratif des compagnies aériennes ou AAC (de l'anglais *Airline Administrative Control*). À titre d'exemple encore, le ou chaque coeur secondaire 42 est configuré pour exécuter des applications de gestion d'équipements informatiques, telles qu'une application de gestion d'imprimante, une application de gestion de certaines fonctions d'un serveur de communication externe.

En complément facultatif, le processeur 30 est configuré pour exécuter un ou plusieurs traitements logiciels au cours d'une période temporelle prédéfinie, la période temporelle prédéfinie étant répétée de manière périodique.

La période temporelle prédéfinie comporte avantageusement plusieurs zones temporelles distinctes et successives, et au moins l'une desdites zones temporelles est réservée à l'exécution de traitements logiciels par le coeur tertiaire 44. Le fait qu'au moins l'une desdites zones temporelles soit dédiée au coeur tertiaire 44 permet d'améliorer la performance du calculateur avionique 15.

En complément encore, l'exécution de traitements logiciels par l'au moins un coeur primaire 40 et/ou l'au moins un coeur secondaire 42 est préférentiellement interdite lors de l'au moins une zone temporelle réservée à l'exécution de traitements logiciels par le coeur tertiaire 44.

Chaque filtrage respectif de message, réalisé par le coeur tertiaire 44, est typiquement un filtrage syntaxique ou un filtrage sémantique.

Le filtrage syntaxique comporte avantageusement la vérification d'au moins un critère syntaxique choisi parmi le groupe consistant en : l'appartenance de l'émetteur du message à une liste d'émetteurs autorisés, l'appartenance du destinataire du message à une liste de destinataires autorisés, et la conformité du message à l'un des formats prédéfinis autorisés.

Le filtrage sémantique comporte avantageusement la vérification d'au moins un critère sémantique choisi parmi le groupe consistant en : l'appartenance d'une ou plusieurs données du message à une plage de valeurs autorisées, la cohérence d'au moins une donnée du message par rapport à une référence prédéfinie, et la cohérence entre au moins deux données du message.

De par ce filtrage des messages, le coeur tertiaire 44 remplit une fonctionnalité de cyber sécurité, et également appelé coeur de traitement cyber.

Le coeur tertiaire 44 est configuré en outre pour, après la réalisation de l'au moins un filtrage, transmettre le message à l'équipement avionique 20 respectif avec un protocole de communication différent de celui associé au message reçu de l'appareil externe 22 respectif.

Chaque périphérique primaire de communication 32 est connecté entre l'au moins un coeur primaire 40 et le port primaire de communication 50 respectif. Chaque périphérique primaire de communication 32 est avantageusement commandable via un pilote primaire de périphérique respectif, et chaque pilote primaire de périphérique est exécutable en mode utilisateur (de l'anglais *user mode*) ou en mode noyau (de l'anglais *kernel OS mode* ou *kernel mode*).

Chaque bus primaire de communication 34 relie l'au moins un coeur primaire 40 à au moins un périphérique primaire de communication 32 respectif.

Dans les exemples des figures 1 et 2, le calculateur avionique 15 comporte deux périphériques primaires 32, l'un étant conforme à la norme ARINC 664, notée A664, telle que la norme ARINC 664 Partie 3, notée A664p3, ou la norme ARINC 664 Partie 7, notée A664p7 ; l'autre étant conforme à la norme ARINC 429, notée A429.

Chaque périphérique secondaire de communication 36 est connecté entre l'au moins un coeur secondaire 42 et le port secondaire de communication 52 respectif. Chaque périphérique secondaire de communication 36 est avantageusement commandable via un pilote secondaire de périphérique respectif, et chaque pilote secondaire de périphérique est exécutable seulement en mode utilisateur, ou mode « user ».

Chaque bus secondaire de communication 38 relie l'au moins un coeur secondaire 42 à au moins un périphérique secondaire de communication 36 respectif.

Dans les exemples des figures 1 et 2, le calculateur avionique 15 comporte deux périphériques secondaires 36, l'un étant conforme à la norme ARINC 429, notée A429 ; l'autre étant conforme à la norme Ethernet.

Ainsi, le calculateur avionique 15 selon l'invention permet d'accueillir de manière modulaire une fonction de cyber sécurité via le coeur tertiaire 44 et une autre fonction d'exécution des applications logicielles avioniques A1, A2, A3 via l'au moins un coeur respectif choisi parmi l'au moins un coeur primaire 40 et l'au moins un coeur secondaire 42. Dans un contexte de modularité, également appelé IMA (de l'anglais *Integrated Module Avionics*), le calculateur avionique 15 selon l'invention permet alors de pouvoir utiliser le même matériel pour une autre fonction ou sur un nouvel aéronef tout en garantissant, avec des contraintes de réalisation des applications, de l'indépendance et de de la non perturbation des applications entre elles. De plus, l'architecture et le système IMA permet d'avoir une certification incrémentale, ce qui signifie qu'une évolution d'une application, conformément aux exigences de réalisation, ne remet pas en cause la certification de l'ensemble calculateur/applications.

Le calculateur avionique 15 selon l'invention permet alors d'accueillir une ou plusieurs fonctions du domaine avionique 26, telles qu'une ou plusieurs fonctions du domaine ACD, et une fonction cyber de par le filtrage syntaxique et/ou sémantique offrant une protection contre les attaques du domaine ouvert 28.

Seul(s) le ou chaque coeur secondaire 42 est en relation directe avec le domaine ouvert 28 (domaine d'où peuvent venir les attaques) et a accès au(x) périphérique(s) secondaire(s) 36 exposé(s) au domaine ouvert 28. Chaque coeur secondaire 42 est alors également appelé coeur exposé.

Chaque pilote de périphérique secondaire 36 est de préférence exécuté en mode utilisateur pour limiter l'impact d'une vulnérabilité du pilote et ne pas impacter le noyau du calculateur avionique 15.

Le coeur tertiaire 44, dit de « traitement cyber », est sans accès direct avec un des périphériques secondaires 36 recevant des données du domaine ouvert 28, et aussi sans accès direct vers des périphériques primaires 32 du domaine avionique 26, ceci pour éviter un court-circuitage des traitements cyber entre le domaine ouvert 28 et le domaine avionique 26. La fonction de filtrage mise en oeuvre par le coeur tertiaire 44 vise à ce que chaque flux transmis au domaine avionique 26 soit conforme à un flux aéronautique non compromis.

Ainsi, avant de passer dans la zone de confiance 60 incluant le domaine avionique 26, un flux issu du domaine ouvert 28 doit passer par ces deux coeurs, à savoir le coeur secondaire 42 dit coeur exposé, puis le coeur tertiaire 44 dit coeur de traitement cyber.

La performance du calculateur avionique 15 est assurée par des coeurs secondaire 42 et tertiaire 44 alloués statiquement et avec des zones temporelles dédiées au cours de chaque période temporelle prédéfinie. Les autres coeurs, notamment le ou les coeurs primaires 40, sont avantageusement dédiés aux applications applicatives dans un système IMA.

En partant d'une fonction aéronautique précédemment hébergée dans un calculateur IMA ou non, le calculateur avionique 15 selon l'invention avec son processeur multicoeurs 30, où deux coeurs 42, 44 sont associés à la cyber sécurité et les autres coeurs sont utilisables pour héberger la fonction aéronautique initiale, permet donc d'ajouter une fonction de cyber sécurité à la fonction aéronautique initiale, ceci sans rajouter de calculateur ou de carte électronique.

On conçoit ainsi que le calculateur avionique 15 selon l'invention permet de répondre plus efficacement au besoin de passerelle de sécurité entre le domaine ouvert 28 et le domaine avionique 26.

## Revendications

1. Calculateur avionique (15) destiné à être embarqué à bord d'un aéronef (5), le calculateur (15) comprenant un processeur multicoeurs (30) configuré pour exécuter une ou plusieurs applications logicielles avioniques (A1, A2, A3), le processeur (30) comportant :
- au moins un coeur primaire (40) configuré pour communiquer avec au moins un équipement avionique (20) distinct du calculateur (15), le ou chaque équipement avionique (20) étant embarqué à bord de l'aéronef (5) et appartenant à un domaine avionique (26),
- au moins un coeur secondaire (42) configuré pour communiquer avec au moins un appareil électronique (22) externe au domaine avionique (26), l'au moins un coeur secondaire (42) étant distinct de l'au moins un coeur primaire (40), et
- un coeur tertiaire (44) configuré pour réaliser au moins un filtrage d'un message de donnée(s) reçu d'un appareil (22) respectif externe au domaine avionique (26) à destination d'un équipement avionique (20) respectif du domaine avionique (26), le coeur tertiaire (44) étant distinct de l'au moins un coeur primaire (40) et de l'au moins un coeur secondaire (42) ;
chaque application logicielle avionique (A1, A2, A3) étant exécutable par un coeur respectif choisi parmi l'au moins un coeur primaire (40) et l'au moins un coeur secondaire (42).

2. Calculateur (15) selon la revendication 1, dans lequel chaque filtrage est choisi parmi un filtrage syntaxique et un filtrage sémantique.

3. Calculateur (15) selon la revendication 2, dans lequel le filtrage syntaxique comporte la vérification d'au moins un critère syntaxique choisi parmi le groupe consistant en : l'appartenance de l'émetteur du message à une liste d'émetteurs autorisés, l'appartenance du destinataire du message à une liste de destinataires autorisés, et la conformité du message à l'un des formats prédéfinis autorisés.

4. Calculateur (15) selon la revendication 2 ou 3, dans lequel le filtrage sémantique comporte la vérification d'au moins un critère sémantique choisi parmi le groupe consistant en : l'appartenance d'une ou plusieurs données du message à une plage de valeurs autorisées, la cohérence d'au moins une donnée du message par rapport à une référence prédéfinie, et la cohérence entre au moins deux données du message.

5. Calculateur (15) selon l'une quelconque des revendications précédentes, dans lequel le coeur tertiaire (44) est configuré en outre pour, après la réalisation de l'au moins un filtrage, transmettre le message à l'équipement avionique (20) respectif avec un protocole de communication différent de celui associé au message reçu de l'appareil externe (22) respectif.

6. Calculateur (15) selon l'une quelconque des revendications précédentes, dans lequel le processeur (30) est configuré pour exécuter un ou plusieurs traitements logiciels au cours d'une période temporelle prédéfinie, la période temporelle prédéfinie étant répétée de manière périodique, la période temporelle prédéfinie comportant plusieurs zones temporelles distinctes et successives, et au moins l'une desdites zones temporelles est réservée à l'exécution de traitement(s) logiciel(s) par le coeur tertiaire (44).

7. Calculateur (15) selon la revendication 6, dans lequel l'exécution de traitement(s) logiciel(s) par l'au moins un coeur primaire (40) et/ou l'au moins un coeur secondaire (42) est interdite lors de l'au moins une zone temporelle réservée à l'exécution de traitement(s) logiciel(s) par le coeur tertiaire (44).

8. Calculateur (15) selon l'une quelconque des revendications précédentes, dans lequel chaque communication avec un équipement avionique (20) respectif est effectuée par le coeur primaire (40) correspondant selon un protocole de communication avionique respectif et via un port primaire de communication (50) respectif du calculateur (15) ;
le protocole de communication avionique étant de préférence choisi parmi le groupe consistant en : un protocole conforme à la norme ARINC 664, telle que la norme ARINC 664 Partie 3 ou la norme ARINC 664 Partie 7 ; un protocole conforme à la norme ARINC 429 ; un protocole conforme à la norme ISO 11898, dite bus CAN, telle que la norme ISO 11898-2 ou la norme ISO 11898-3 ; et un protocole conforme à la norme MIL-STD-1553, telle que la norme MIL-STD-1553A ou la norme MIL-STD-1553B.

9. Calculateur (15) selon la revendication 8, dans lequel le calculateur (15) comprend en outre un périphérique primaire de communication (32) pour chaque protocole de communication avionique respectif, chaque périphérique primaire de communication (32) étant connecté entre l'au moins un coeur primaire (40) et le port primaire de communication (50) respectif.

10. Calculateur (15) selon la revendication 9, dans lequel chaque périphérique primaire de communication (32) est commandable via un pilote primaire de périphérique respectif, et chaque pilote primaire de périphérique est exécutable en mode utilisateur ou en mode noyau.

11. Calculateur (15) selon l'une quelconque des revendications précédentes, dans lequel chaque communication avec un appareil électronique externe (22) respectif est effectuée par le coeur secondaire (42) correspondant selon un protocole de communication externe et via un port secondaire de communication (52) respectif du calculateur (15) ;
le protocole de communication externe étant de préférence choisi parmi un protocole conforme à la norme Ethernet et un protocole conforme à la norme ARINC 429.

12. Calculateur (15) selon la revendication 11, dans lequel le calculateur (15) comprend en outre un périphérique secondaire de communication (36) pour chaque protocole de communication externe respectif, chaque périphérique secondaire de communication (36) étant connecté entre l'au moins un coeur secondaire (42) et le port secondaire de communication (52) respectif ;
chaque périphérique secondaire de communication (36) étant de préférence commandable via un pilote secondaire de périphérique respectif, et chaque pilote secondaire de périphérique est exécutable seulement en mode utilisateur.

13. Calculateur (15) selon les revendications 9 et 12, dans lequel le calculateur (15) comprend en outre un bus primaire de communication (34) reliant l'au moins un coeur primaire (40) à chaque périphérique primaire de communication (32) respectif, et un bus secondaire de communication (38) reliant l'au moins un coeur secondaire (42) à chaque périphérique secondaire de communication (36) respectif, chaque bus secondaire (38) étant distinct de chaque bus primaire (34).

14. Calculateur (15) selon les revendications 9 et 12 ou selon la revendication 13, dans lequel chaque port secondaire de communication (52) est distinct de chaque port primaire de communication (50).

15. Calculateur (15) selon l'une quelconque des revendications précédentes, dans lequel le domaine avionique (26) est un domaine correspondant à un niveau de sécurité le plus élevé à bord de l'aéronef (5) ;
le domaine avionique (26) étant de préférence le domaine ACD selon la norme ARINC 811 du 20 décembre 2005.
